(19) **Europäisches Patentamt**

**European Patent Office**

**Office européen des brevets**

(11) **EP 1 632 714 A2**

(12) **EUROPÄISCHE PATENTANMELDUNG**

(43) Veröffentlichungstag:
**08.03.2006 Patentblatt 2006/10**

(51) Int Cl.:
**F21V 9/00** (2006.01)   **B60Q 1/14** (2006.01)
**F21S 8/10** (2006.01)

(21) Anmeldenummer: **05016987.9**

(22) Anmeldetag: **04.08.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **03.09.2004 DE 102004043176**

(71) Anmelder: **Patent-Treuhand-Gesellschaft für elektrische Glühlampen mbH 81543 München (DE)**

(72) Erfinder: **Schmidt, Hans-Joachim, Dr. 85049 Ingolstadt (DE)**

(54) **Infrarotscheinwerfer**

(57) Offenbart ist ein Infrarotscheinwerfer mit einem in einem Reflektor angeordneten Infrarotstrahler, der eine Strahlungsquelle aufweist, die in einem Innenraum eines Lampengefäßes aufgenommen ist, und ein Nachtsichtsystem mit einem derartigen Infrarotscheinwerfer. Der Strahlungsquelle ist ein Filterkörper zugeordnet, der einen mit einer Filterschicht versehenen und einen un- beschichteten Teil hat, die derart ausgebildet sind, dass eine Gesamtstrahlung durch den unbeschichteten Teil des Filterkörpers im Wesentlichen auf einen anderen Bereich des Reflektors einfällt als die durch die Filterschicht transmittierte Infrarotstrahlung. Offenbart ist des Weiteren ein Infrarotstrahler für einen derartigen Infrarotscheinwerfer.

FIG 3

## Beschreibung

### Technisches Gebiet

Die Erfindung betrifft einen Infrarotscheinwerfer mit einem in einem Reflektor angeordneten Infrarotstrahler gemäß dem Oberbegriff des Patentanspruchs 1 und einen für einen derartigen Infrarotscheinwerfer vorgesehenen Infrarotstrahler sowie ein Nachtsichtsystem mit einem derartigen Infrarotscheinwerfer.

### Stand der Technik

Derartige Infrarotscheinwerfer werden beispielsweise als Illuminator für Nachtsichtsysteme eingesetzt, die zukünftig auch zur Verwendung in Kraftfahrzeugen vorgesehen sind.

In der EP 1 072 841 A2 ist ein Infrarotscheinwerfer offenbart, bei dem eine Glühlampe als Infrarot-Strahlungswelle verwendet wird, deren Glühwendel während des Betriebs sowohl Infrarotstrahlung als auch Licht im sichtbaren Bereich emittiert. Bei der bekannten Lösung hat der Infrarotscheinwerfer einen parabolischen Reflektor, der die Infrarotstrahlung in die gewünschte Richtung lenkt und sichtbare Strahlung transmittiert. Die Reflektoröffnung ist durch eine Filterscheibe abgedeckt und das die Glühwendel umschließende Lampengefäß des Infrarotstrahlers in einem Kuppenbereich mit einer lichtreflektierenden Beschichtung versehen. Die für Licht im sichtbaren Bereich undurchlässige Filterscheibe stellt einen Planfilter dar, der entweder nach dem Absorptionsprinzip oder nach dem Interferenzprinzip ausgeführt sein kann. Eine solche Lösung hat die folgenden Nachteile: Infrarot-Planfilter nach dem Absorptionsprinzip eignen sich nicht für Temperaturen oberhalb 250°C und enthalten teilweise auch Cadmium. Aus diesen Gründen sind derartige Planfilter für Automotive-Anwendungen nicht geeignet. Infrarot-Planfilter nach dem Interferenzprinzip sind nur für eine sehr begrenzte Apertur des Scheinwerfers geeignet, weil sich durch die zum Rand hin steigenden Einfallswinkel der vom Infrarotstrahler emittierten Strahlung die Filterkante hin zu kürzeren Wellenlängen verschiebt, wodurch beispielsweise störendes Rotlicht entstehen kann. In der Praxis bedeutet dies, dass zur Vermeidung von rotem Restlicht nicht die gesamte Austrittsfläche eines üblichen Scheinwerfers mit dem Filter abgedeckt werden kann, sondern außen ein ringförmiger Bereich freigelassen werden muss, durch den weißes Licht abgestrahlt wird.

Die DE 39 32 216 A1 offenbart eine Beleuchtungseinrichtung für Automotive-Anwendungen, die sowohl als Infrarotscheinwerfer als auch als Fernlicht einsetzbar ist. Die Beleuchtungseinrichtung hat einen Reflektor, in den eine Lichtquelle eingesetzt ist. Im Reflektor ist des Weiteren noch ein Filter eingesetzt, das für Infrarotstrahlung durchlässig ist und die Strahlung im sichtbaren Bereich zur Lichtquelle hin reflektiert. Im Fernlichtbetrieb ist das Filter derart mit Bezug zur Lichtquelle verschoben, dass es unwirksam ist und somit die Gesamtstrahlung über den Reflektor hin zur Reflektoröffnung reflektiert wird. Bei eingeschaltetem Abblendlicht wird das Filter über die Lichtquelle geschoben, so dass die Beleuchtungseinrichtung nur Infrarotstrahlung abgibt.

Der Nachteil einer derartigen Lösung besteht darin, dass durch das über die Beleuchtungseinrichtung geschobenen zylindrischen Filter thermische Probleme auftreten können, so dass die Lampe entweder für den Fernlichtbetrieb unterdimensioniert ist oder im Infrarotbetrieb zu heiß wird. Des Weiteren zeigt es sich, dass auch bei dieser Beleuchtungseinrichtung störendes Rotlicht aufgrund großer Einfallswinkel auf das zylindrische Interferenzfilter entsteht. Zur Verschiebung des Filters wird eine aufwändige Mechanik benötigt. Die Einbautiefe des Scheinwerfers vergrößert sich erheblich, weil sich das gesamte Filter im Fernlichtbetrieb vor der Lampe befinden muss. Es wird ein Schlitz im Reflektor erforderlich, durch den sich die wirksame Reflektorfläche und damit der Wirkungsgrad der Anordnung verringert.

### Darstellung der Erfindung

Der Erfindung liegt die Aufgabe zugrunde, einen Infrarotscheinwerfer und einen dafür geeigneten Infrarotstrahler zu schaffen, bei denen die Infrarotabstrahlung verbessert ist.

Diese Aufgabe wird erfindungsgemäß hinsichtlich des Infrarotscheinwerfers durch die Merkmale des Patentanspruchs 1 und hinsichtlich des Infrarotstrahlers durch die Merkmale des Patentanspruchs 17 gelöst. Besonders vorteilhafte Ausführungen der Erfindung sind in den abhängigen Ansprüchen beschrieben.

Der erfindungsgemäße Infrarotscheinwerfer hat einen in einem Reflektor angeordneten Infrarotstrahler, der eine Strahlungsquelle aufweist, die in einem Innenraum eines Lampengefäßes aufgenommen ist. Der Strahlungsquelle ist ein Filterkörper zugeordnet, der abschnittsweise mit einer für Infrarotstrahlung durchlässigen Filterschicht versehen ist, die für Licht im sichtbaren Bereich undurchlässig ist. Erfindungsgemäß ist diese Filterschicht lediglich an einem Teilbereich des Filterkörpers aufgebracht, während ein nicht mit einer derartigen Filterschicht versehener Teil des Filterkörpers für eine Gesamtstrahlung (IR-Strahlung und sichtbare Strahlung) durchlässig ist. Erfindungsgemäß sind der unbeschichtete und der beschichtete Teil des Filterkörpers so ausgeführt, dass die Gesamtstrahlung im Wesentlichen in einen anderen Bereich des Reflektors als die durch die Filterschicht tretende Infrarotstrahlung einfällt. Ein wesentlicher Teil des vom Filter nicht transmittierten Strahlungsanteils wird nicht absorbiert, sondern hin zur Glühwendel reflektiert und dient zur Aufheizung des Leuchtmittels, so dass die Effizienz des Infrarotstrahlers gesteigert wird.

Der erfindungsgemäße Infrarotstrahler hat eine in einem Lampengefäß ausgeführte Glühwendel. Dieser ist ein Filterkörper zugeordnet, der das Lampengefäß mit einem rotationselliptischen Vorderteil umschließt, das mit einer Interferenzbeschichtung versehen ist und an das sich ein Schaft ohne Interferenzbeschichtung anschließt, der eine Gesamtstrahlung transmittiert.

Es zeigte sich, dass es mit der erfindungsgemäßen Lösung möglich ist, den Anteil an rotem Störlicht bis an die Wahrnehmungsschwelle zu verringern.

Erfindungsgemäß wird es besonders bevorzugt, wenn der mit der Filterschicht versehene Teil des Filterkörpers rotationssymmetrisch, vorzugsweise als Rotationsellipsoid ausgebildet ist, der ein Lampengefäß des Infrarotstrahlers im Bereich der Strahlungsquelle umgreift und an den sich ein Schaft anschließt, der in vergleichsweise geringem Abstand zu dem sich vom Innenraum des Lampengefäßes zum Reflektor hin erstreckenden Teil des Lampengefäßes angeordnet ist.

Bei einem Ausführungsbeispiel der Erfindung wird die Strahlungsquelle als eine in der Lampenachse angeordnete Glühwendel ausgeführt, die im Bereich zwischen den beiden Brennpunkten des als Rotationsellipsoid ausgebildeten Filters angeordnet ist.

Der Übergang zwischen dem rotationssymmetrisch ausgebildeten Filter und dem Schaft des Filterkörpers liegt bei einem bevorzugten Ausführungsbeispiel auf einem Schnittkreis eines Kegels, dessen Spitze sich im rückwärtigen Ende der Glühwendel befindet und für dessen halben Kegelwinkel $20\,° \leq \alpha \leq 50°$ gilt, wobei ein Wert von $40°$ bevorzugt wird.

Der Filterkörper wird vorteilhafterweise aus Glas ausgebildet, wobei die Filterschicht ein Infrarotkantenfilter, vorzugsweise in Form einer Interferenzbeschichtung ist.

Die Kantenwellenlänge $\lambda_1$ des Filters kann dann etwa bei 780 bis 830 nm, vorzugsweise bei 800 nm liegen.

Die Restlichtabstrahlung des Infrarotstrahlers lässt sich weiter minimieren, wenn die beiden eingangs genannten Bereiche des Reflektors unterschiedlich beschichtet werden, wobei der vordere Bereich, auf den die gefilterte Infrarotstrahlung auftritt, aselektiv ausgebildet ist, während der hintere Bereich, auf den die Gesamtstrahlung einfällt, derart ausgebildet ist, dass die Strahlung in einem vorbestimmten Wellenlängenbereich, beispielsweise $\geq 800$ nm, reflektiert und ansonsten absorbiert wird.

In dem Fall, dass der Infrarotscheinwerfer lediglich im Infrarotbereich betrieben werden soll, kann der vordere Bereich des Reflektors durch farblos eloxiertes Aluminium oder mit Aluminium oder Silber bedampftes Glas oder Kunststoff ausgeführt werden, während der hintere Teil durch schwarz eloxiertes Aluminium oder mit einer Infrarotstrahlung reflektierenden Interferenzschicht versehenes Glas oder schwarzen Kunststoff gebildet wird. Dabei wird die vom Filter transmittierte Infrarotstrahlung vollständig und von der den unbeschichteten Bereich des Filterkörpers durchdringenden Gesamtstrahlung nur ein Anteil oberhalb einer vorbestimmten Wellenlänge $\lambda_3$ reflektiert, wobei zweckmäßigerweise $\lambda_3 \approx \lambda_1$ gewählt wird.

In dem Fall, in dem der Infrarotscheinwerfer auch mit einer Fernlichtfunktion ausgeführt sein soll, kann der Reflektor vollständig aus einem aselektiv reflektierenden Material bestehen oder damit beschichtet sein.

Die Fernlichtfunktion lässt sich besonders einfach realisieren, wenn auf dem Schaft ein im Wesentlichen strahlungsundurchlässiges Umschaltelement, z.B. in Form einer zylindrischen Metallhülse, verschiebbar oder in der Länge änderbar geführt ist, das in der Funktion als Infrarotscheinwerfer den für die Gesamtstrahlung durchlässigen Schaft des Filterkörpers vollständig bedeckt und ihn in der Fernlichtfunktion soweit wie möglich freigibt.

Die Länge der Hülse entspricht vorzugsweise mindestens der Hälfte der Länge des Schafts des Filterkörpers, entlang dessen die Hülse verschiebbar ist. Diese Verschiebung kann beispielsweise durch eine translatorische Bewegung oder eine Kombination aus translatorischer und rotatorischer Bewegung erfolgen.

Alternativ kann die Hülse auch teleskopartig verlängerbar sein, um im Infrarotbetrieb den filternahen Bereich des Schaftes abzudecken und im Fernlichtbetrieb freizugeben. Die Hülse wird vorzugsweise aus Edelstahl hergestellt.

## Kurze Beschreibung der Zeichnungen

Nachstehend wird die Erfindung anhand bevorzugter Ausführungsbeispiele näher erläutert. Es zeigen:

Figur 1 eine Schnittdarstellung eines erfindungsgemäßen Infrarotscheinwerfers;

Figur 2 den Strahlengang beim Ausführungsbeispiel gemäß Figur 1;

Figur 3 eine Schnittdarstellung eines Infrarotscheinwerfers mit Fernlichtfunktion und

Figur 4 den Strahlengang beim Ausführungsbeispiel gemäß Figur 3.

**Bevorzugte Ausführungen der Erfindung**

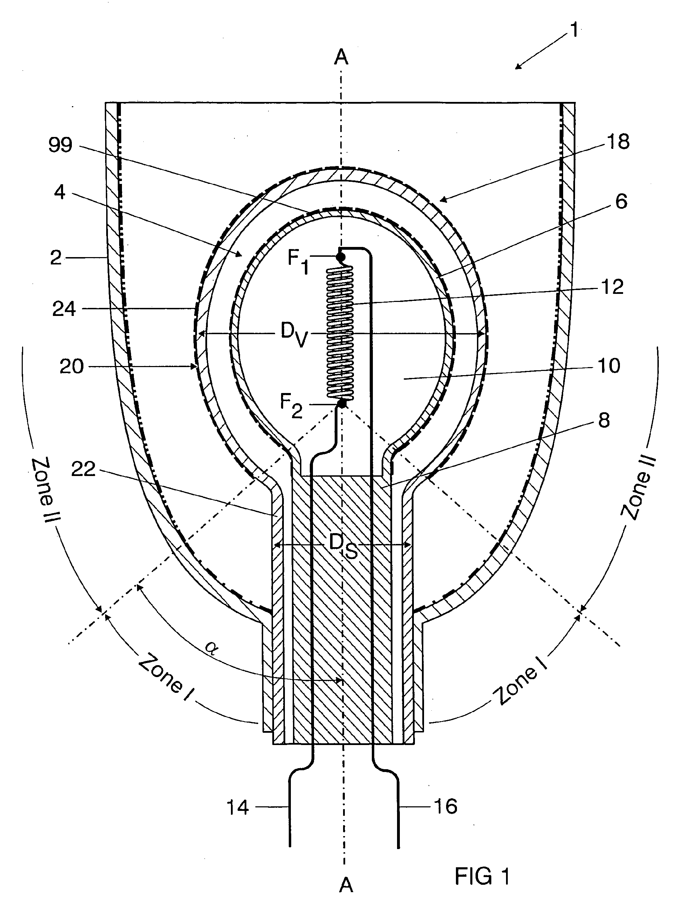

Figur 1 zeigt eine schematische Darstellung eines Infrarotscheinwerfers 1, über den NIR- (near infrared) Strahlung abgegeben wird. Derartige Infrarotscheinwerfer eignen sich nicht nur für Kraftfahrzeuge, sondern sind allgemein auch bei Überwachungsaufgaben oder einer automatischen Nummernschilderkennung etc. einsetzbar.

Der Infrarotscheinwerfer 1 hat einen parabolischen Reflektor 2, der beispielsweise aus Aluminium, Glas oder Kunststoff hergestellt ist. In diesen Reflektor 2 ist eine Glühlampe 4 eingesetzt, die beispielsweise als Halogenglühlampe mit einer Leistungsaufnahme zwischen 50 und 100 W ausgeführt sein kann. Die Gesamtstrahlung derartiger Halogenglühlampen enthält für den Einsatz in einem Infrarotscheinwerfer 1 einen hinreichend großen Anteil an NIR-Strahlung. Die Glühlampe 4 besteht im Wesentlichen aus einem Lampengefäß 6, das einseitig durch eine Quetschung 8 geschlossen ist. In einem Innenraum 10 des Lampengefäßes 6 ist eine einzelne, in der Achse A-A des Infrarotscheinwerfers 1 verlaufende Glühwendel 12 als Strahlungsquelle angeordnet. Die Stromversorgung der Glühwendel 12 erfolgt über zwei Stromzuführungen 14, 16, die durch die Quetschung 8 hindurchgeführt sind. Das Lampengefäß 6 besteht vorzugsweise aus Quarzglas, und der Innenraum 10 ist bei einer Halogenglühlampe mit einem Halogene enthaltenden Füllgas gefüllt. Dieses Befüllen erfolgt über einen nicht dargestellten Pumpstängelansatz, durch den hindurch der Innenraum 10 evakuiert und befüllt werden kann. Nach dem Befüllen wird der Pumpstängelansatz zugeschmolzen.

Bis hierhin entspricht der Aufbau des Infrarotscheinwerfers 1 herkömmlichen Lösungen.

Eine Besonderheit der der Erfindung liegt darin, dass die Glühlampe 4 von einem Filterkörper 18 umgeben ist, der im Wesentlichen aus einem als Rotationsellipsoid ausgeführten Vorderteil 20 und einem sich daran anschließenden Schaft 22 besteht, dessen Durchmesser $D_S$ gegenüber dem Durchmesser des Vorderteils $D_V$ (Ansicht nach Fig. 1) zurückgesetzt ist. Die beiden Brennpunkte des elliptischen Vorderteils 20 sind in Fig. 1 mit dem Bezugszeichen $F_1$ und $F_2$ gekennzeichnet. Die Lage der Glühwendel 12 ist so gewählt, dass sie in Axialrichtung zwischen diesen beiden Brennpunkten $F_1$ und $F_2$ liegt. Der Filterkörper 18 ist beispielsweise aus Quarzglas hergestellt. Die Außenfläche des elliptischen Vorderteils 20 ist mit einer als Filter wirkenden Beschichtung versehen. Beim dargestellten Ausführungsbeispiel ist dieses Filter durch eine Interferenzbeschichtung 24 in Form eines Infrarot-Kantenfilters ausgeführt. Ein derartiges Kantenfilter transmittiert nur Strahlung oberhalb einer vorgegebenen Wellenlänge $\lambda_1$, die beim dargestellten Ausführungsbeispiel im Bereich von 800 nm gewählt ist - d. h., das Filter ist durchlässig für eine NIR-Strahlung. Ein wesentlicher Teil der Strahlung mit geringerer Wellenlänge wird zurück in das Innere in Richtung auf die Glühwendel 12 reflektiert, so dass diese aufgeheizt wird. Je nach Anwendungsfall kann durch Vorsehen weiterer Schichten, beispielsweise Absorberschichten, die Transparenz im kurzwelligen Bereich unterhalb 800 nm weiter reduziert werden.

In einer bevorzugten Ausführungsform ist das die Glühwendel 12 umgreifende Lampengefäß 6 als Ellipsoid ausgebildet, welches rotationssymmetrisch zur Achse A-A ist und welches die Punkte F1 und F2 als Brennpunkte hat. Dabei trägt das Lampengefäß 6 eine Beschichtung 99, welche im Wesentlichen nur Strahlung mit Wellenlängen unterhalb einer vorgegebenen Wellenlänge $\lambda_2 > \lambda_1$ transmittiert. Dieses Merkmal ist von den sogenannten IRC-Lampen her bereits bekannt, die Filterkante $\lambda_2$ liegt im Unterschied hierzu aber nicht bei ca. 850nm, sondern bei wesentlich höheren Wellenlängen im Bereich von 1100nm. Dadurch wird Strahlung mit Wellenlängen oberhalb 1100nm, für die ein Silizium-Bildsensor nicht mehr empfindlich ist, energiesparend auf die Glühwendel 12 zurückreflektiert. Ein wesentliches Merkmal der Beschichtung 99 des Lampengefäßes 6 ist, dass keinesfalls absorbierende Elemente eingesetzt werden. Dadurch und wegen $\lambda_2 > \lambda_1$ kann auch die an der Beschichtung 24 des äußeren Filterkörpers 20 nach innen reflektierte, kurzwellige Strahlung die Beschichtung 99 des Lampengefäßes 6 nach innen passieren und trägt zusätzlich zur Aufheizung der Glühwendel 12 bei. Das Gesamtsystem aus der äußeren Beschichtung 24 und der inneren Beschichtung 99 zeigt dadurch nach außen hin ein Bandpassverhalten mit einem Durchlassbereich $\lambda_1 < \lambda < \lambda_2$. Strahlung mit Wellenlängen außerhalb des Durchlassbereichs wird energiesparend zur Aufheizung der Glühwendel 12 eingesetzt, wodurch sich eine erhöhte Emission innerhalb des Durchlassbereichs ergibt.

In einer anderen bevorzugten Ausführungsform wird für die Glühlampe 4 im Wesentlichen der zylindrische Brenner einer normalen Autolampe, z.B. H7 oder H9, mit aselektiv transmittierendem, d.h. unbeschichtetem Lampengefäß 6 verwendet. Dabei wirkt die gesamte Anordnung zwar nur als reines Kantenfilter, d.h. es findet keine Rückgewinnung der Energie bei Wellenlängen $\lambda > \lambda_2$ statt. Es ergibt sich aber eine erhebliche konstruktive Vereinfachung, da die Trennung von Lampengefäß und Filterfunktion die Verwendung von im Wesentlichen konventionell aufgebauten Autolampen ermöglicht. Durch das in Form eines Rotationsellipsoides um die Glühlampe herum aufgebaute Interferenzfilter werden die eingangs geschilderten Nachteile separater Planfilter oder zylindrischer Filter aber vermieden.

Erfindungsgemäß ist der Schaft 22 nicht als Filter ausgeführt und somit für die Gesamtstrahlung durchlässig. Beim beschriebenen Ausführungsbeispiel erstreckt sich die Interferenzbeschichtung 24 nicht in den Bereich des Schafts 22 hinein. Demnach ist das durch das Vorderteil 20 des Filterkörpers 18 gebildete Filter rückwärtig für die Gesamtstrahlung offen ausgeführt. Diese rückwärtige Öffnung, die das Verhältnis zwischen der NIR-Abstrahlung und der Gesamtstrahlung bestimmt, wird erfindungsgemäß durch den Schnittkreis eines Kegels mit dem Vorderteil 20 bestimmt. Die Spitze dieses Kegels verläuft - wie in Fig. 1 strichpunktiert angedeutet - durch das rückwärtige Ende der Glühwendel 12, wobei für den halben Kegelwinkel $\alpha$ gilt:

$$20° \leq \alpha \leq 50°.$$

D. h., der Durchmesser $D_S$ des Schafts 22 ist durch den Schnittkreis dieses Kegels mit dem elliptischen Vorderteil 20 definiert. Durch diesen Kegel wird auch der Reflektor 2 in zwei Teilbereiche unterteilt, wobei eine Reflektorzone (Zone I) in dem vom Kegelwinkel $2\alpha$ umgriffenen Bereich liegt, während die zweite Zone (Zone II) des Reflektors 2 sich nach außen an den Kegel anschließt.

Bei dem in Fig. 1 erläuterten Ausführungsbeispiel ist die Innenfläche des Reflektors 2 in der Zone II spektral aselektiv ausgeführt. Dieser Bereich ist in Fig. 1 doppelt gepunktet dargestellt und kann beispielsweise durch farblos eloxiertes Aluminium oder aus mit Aluminium oder Silber bedampftem Kunststoff oder Glas hergestellt werden. Die Zone I des Reflektors 2 (einfach gepunktet dargestellt in Fig. 1) ist so ausgeführt, dass sie bevorzugt Strahlung oberhalb einer vorgegebenen Wellenlänge $\lambda_3$, vorzugsweise im Bereich um 800 nm reflektiert und Strahlung mit anderen Wellenlängen im Wesentlichen absorbiert. Das heisst, die Zone I des Reflektors 2 ist als Infrarot-Kantenfilter ausgeführt. Als Material für diesen Bereich (Zone I) kommt beispielsweise schwarz eloxiertes Aluminium sowie Glas oder schwarzer Kunststoff, die mit einer infrarotreflektierenden Interferenzschicht versehen sind, in Frage.

Der Reflektor 2 umgreift den Filterkörper 18 und die Glühlampe, wobei diese einen Sockel des Reflektors durchsetzen.

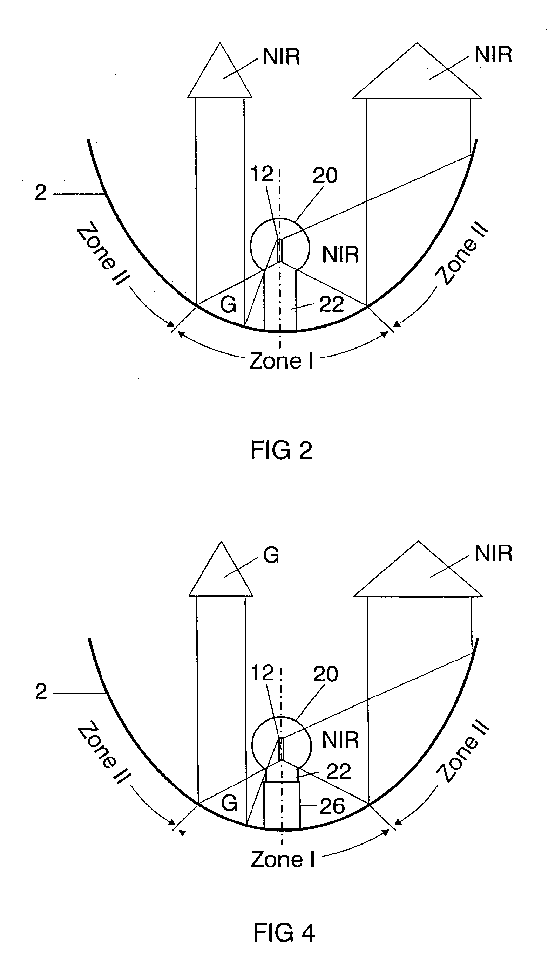

In Figur 2 ist der sich beim Betrieb des Infrarotscheinwerfers 1 gemäß Figur 1 einstellende Strahlengang stark schematisiert eingezeichnet. Demgemäß wird durch die erfindungsgemäße Ausgestaltung des Filterkörpers 18 mit dem als Filter wirkenden elliptischen Vorderteil 20 und dem nicht mit einer Filterschicht versehenen Schaft 22 und durch den wie vorstehend beschrieben ausgeführten Reflektor 2 dafür gesorgt, dass die von der Interferenzbeschichtung 24 (Interferenz-Kantenfilter) transmittierte NIR-Strahlung nur auf die Zone II des Reflektors 2 einfällt. Diese NIR-Strahlung wird in der Zone II reflektiert und tritt aus der Reflektoröffnung aus. Dieser Strahlengang ist in Figur 2 rechts angedeutet. Die Gesamtstrahlung kann lediglich in dem durch den Kegelwinkel $2\alpha$ oder mit Zone I gekennzeichneten Bereich auf den Reflektor 2 einfallen. Da diese Zone I als Infrarot-Kantenfilter ausgeführt ist, wird lediglich der NIR-Anteil der Strahlung reflektiert (links in Figur 2), die Strahlung im darunter liegenden Wellenlängenbereich wird im Wesentlichen absorbiert. Der vom Reflektor 2 in der Zone I reflektierte NIR-Strahlungsanteil tritt gemeinsam mit der NIR-Strahlung aus der Zone II durch die Reflektoröffnung aus.

Im Gegensatz zu einem Infrarotscheinwerfer mit einem auf eine Reflektoröffnung aufgesetzten Planfilter kann die beschriebene Konstruktion mit einer nahezu beliebigen Apertur und vor allem auch in Form eines breit strahlenden Scheinwerfers ausgeführt werden. Unter Beibehaltung der grundsätzlichen geometrischen Proportionen sind nahezu beliebige elektrische Leistungen möglich. Der Vorteil gegenüber der bekannten Lösung mit übergestülptem Zylinderfilter besteht im Wesentlichen darin, dass wesentlich geringere Einfallswinkel auf die ellipsenförmige Filterkontur (Vorderteil 20) auftreten, was eine erhebliche Reduktion des roten Restlichts bei gleichzeitiger Erhöhung des auf die Glühwendel 12 zurückreflektierten, nichttransmittierten Strahlungsanteil zur Folge hat.

Durch den in Figur 1 dargestellten Aufbau wird des Weiteren sichergestellt, dass die von der Glühwendel 12 kommende Strahlung nur einen Infrarotfilter passiert, d. h., die Filterung erfolgt entweder durch die Interferenzbeschichtung 24 oder in der Zone I. Würde man im Gegensatz dazu etwa die gesamte Reflektorfläche mit dem in der Zone I verwendeten Material infrarotselektiv ausführen, ergäbe sich durch die Multiplikation der spektralen Transmissionsgrade nicht nur eine insgesamt geringere Transmission, sondern auch eine im Bereich von 800nm weitaus flachere Filterkante.

Eine möglichst steile Filterkante ist jedoch ein wesentlicher Vorteil, da die Empfindlichkeit von Silizium-Aufnahmesensoren der vorzugsweise in Zusammenwirken mit den erfindungsgemäßen Infrarotscheinwerfern verwendeten Kameras für Nachtsichtsysteme im Bereich 800-1000nm sehr stark abfällt, andererseits aber im langwelligen sichtbaren Bereich möglichst wenig abgestrahlt werden soll.

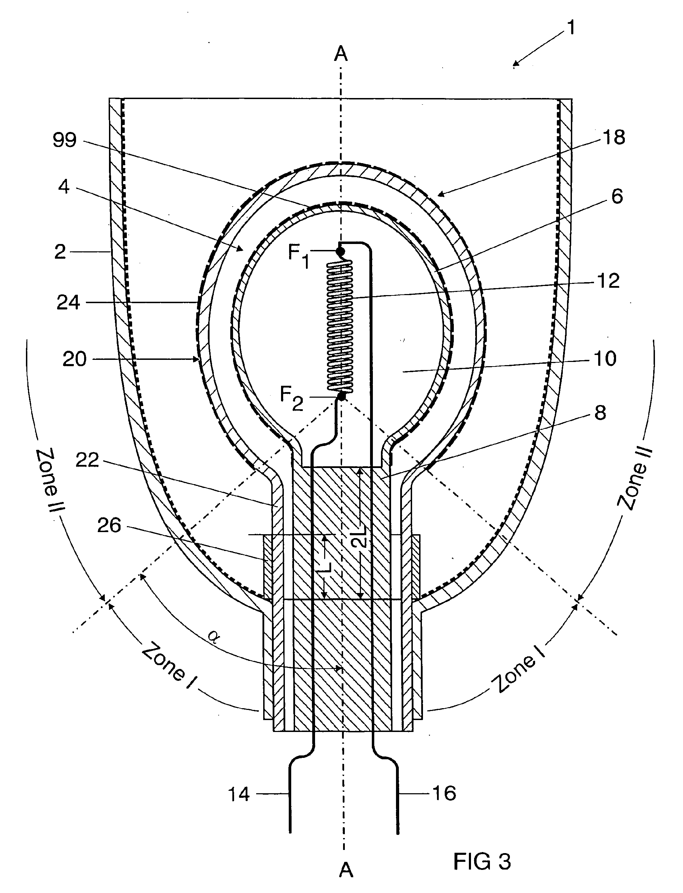

Figur 3 zeigt ein Ausführungsbeispiel, bei dem der Infrarotscheinwerfer 1 mit einer Fernlichtfunktion ausgeführt ist. Im folgenden wird beispielhaft die Anwendung als Fernscheinwerfer für Kraftfahrzeuge geschildert. Der Grundaufbau des Infrarotscheinwerfers 1 ist der Gleiche wie beim vorbeschriebenen Ausführungsbeispiel, d. h., in einen Reflektor 2, dessen Form aus einer parabolischen Kontur besteht, die durch Rotation um eine Symmetrieachse oder Spiegelung an zwei Symmetrieebenen entsteht, ist eine Glühlampe 4, vorzugsweise eine Halogenglühlampe, eingesetzt. Die Glühlampe 4 ist von dem Filterkörper 18 umgriffen, dessen Vorderteil 20 mit einer Interferenzbeschichtung 24 versehen ist. Das Vorderteil 20 ist als Rotationsellipsoid mit den Brennpunkten F1, F2 ausgeführt. An das Vorderteil 20 schließt sich ein etwa zylindrischer Schaft 22 an, der im Wesentlichen für die vom Glühwendel 12 abgegebene Gesamtstrahlung durchlässig ist.

Beim Ausführungsbeispiel gemäß Figur 3 ist auf dem etwa zylindrischen Schaft 22 ein Umschaltzylinder 26 über eine nicht dargestellte Einrichtung axial verschiebbar geführt. Dieser Umschaltzylinder 26 ist für die Gesamtstrahlung im Wesentlichen undurchlässig und beispielsweise aus Edelstahl ausgeführt. Die Axiallänge L des Umschaltzylinders 26 beträgt vorzugsweise mindestens die Hälfte der Gesamtlänge 2L des Schafts 22. Der Innendurchmesser des Umschaltzylinders 26 ist etwas größer als der Außenumfang des Schafts 22 ausgeführt, so dass er gleitend und ohne wesentliche Reibung verschiebbar ist.

Ein weiterer Unterschied zum eingangs beschriebenen Ausführungsbeispiel besteht darin, dass bei dem kombinierten Fernlicht- und Infrarotscheinwerfer gemäß Figur 3 sowohl die Zone I als auch die Zone II aus dem gleichen, aselektiv reflektierenden Material bestehen oder mit einem derartigen Material beschichtet sind.

In der Funktion als Fernscheinwerfer ist das Fernlicht aufgeblendet und der Umschaltzylinder 26 befindet sich in seiner in Figur 3 dargestellten hinteren Position, in der er hin zum Reflektor 2 verschoben ist. Der sich einstellende Strahlengang ist in Figur 4 dargestellt. Wie beim vorbeschriebenen Ausführungsbeispiel fällt die von der Interferenzbeschichtung 24 transmittierte NIR-Strahlung in der Zone II des Reflektors 2 ein und wird von diesem zur Reflektoröffnung hin reflektiert. Die Gesamtstrahlung kann durch den nicht vom Umschaltzylinder 26 abgedeckten Bereich des Schafts 22 hindurchtreten und fällt auf die Zone I auf, wo sie als Gesamtstrahlung reflektiert wird und im sichtbaren Bereich als Fernlicht fungiert.

Der erfindungsgemäße Scheinwerfer strahlt also im Gegensatz zu der in DE 39 32 216 A1 vorgeschlagenen Lösung nicht abwechselnd, sondern gleichzeitig Fernlicht und NIR-Strahlung aus und kann daher für insgesamt ganz erheblich höhere Bestrahlungsstärken dimensioniert werden. Die dadurch mögliche Erhöhung der Reichweite im Fernlichtbetrieb kann allerdings nur in vollem Umfang ausgeschöpft werden, wenn die Kamera des Nachtsichtsystems (nicht abgebildet) nicht nur den NIR-Bereich, sondern auch den gesamten Bereich der sichtbaren Strahlung, also insgesamt den Wellenlängenbereich 380-1100nm, mit hoher Empfindlichkeit aufnehmen kann. Als weiterer Vorteil ergibt sich daraus, dass zur Bilderzeugung auch z.B. das restliche Tageslicht nach Sonnenuntergang, das Licht von Außenbeleuchtungsanlagen mit Leuchtstofflampen, Natrium-Niederdrucklampen, Quecksilber- und Natrium-Hochdrucklampen, beleuchteten Verkehrsschildern sowie Verkehrsampeln und Fahrzeugleuchten mit LED dienen kann. Eine rein infrarotbasiertes Nachtsichtsystem ist hingegen für die genannten Strahlungsquellen blind.

Zum Wechsel von Fernlicht auf im Wesentlichen reine NIR-Strahlung wird der Umschaltzylinder 26 aus der in Figur 3 dargestellten Position nach vorne hin zum Vorderteil 20 verschoben. Dabei liegt die Vorderkante des Umschaltzylinder 26 fast an dem Außenumfang des elliptischen Vorderteils 20 an.

In der vorderen Position des Umschaltzylinders 26 fällt fast keine Gesamtstrahlung in die Zone I des Reflektors 2 ein, so dass nur die von der Interferenzbeschichtung transmittierte NIR-Strahlung über die Zone II des Reflektors 2 abgestrahlt wird. Diese NIR-Strahlung verursacht keine Blendung anderer Verkehrsteilnehmer, der Fahrzeugführer kann jedoch mit Hilfe des Nachtsichtsystems noch weit hinaus über die Grenzen des konventionellen Abblendlichtes, das mit einem separaten Scheinwerfer erzeugt wird, die Vorgänge auf der Fahrbahn erkennen. Aus dem hinteren Teil des Schaftes (zwischen Umschaltzylinder 26 und Reflektor) tritt nur noch eine vernachlässigbare Menge an Streulicht aus.

Beim vorbeschriebenen Ausführungsbeispiel ist der Umschaltzylinder 26 als starre Hülse ausgeführt. Prinzipiell kann dieser auch teleskopförmig ausgebildet werden, so dass für die Fernlichtfunktion der vordere Teil des Schaftes 22 freigegeben werden kann, während in der Abblendfunktion der Umschaltzylinder 26 in Axialrichtung nach vorne verlängert wird, so dass die hintere Hälfte des Schaftes 22 stets strahlungsdicht umschlossen ist, und eine besonders weitgehende Abblendung erzielt wird.

Im Unterschied zu einem normalen Fernlicht kann der erfindungsgemäße Infrarotscheinwerfer 1 nicht nur ein- und ausgeschaltet werden, sondern durch Verstellung des Umschaltzylinders 26 kann auch zwischen Gesamtstrahlung plus NIR-Strahlung (Figur 4 links und rechts) und reiner NIR-Strahlung (Figur 4 rechts) gewählt werden. Diese Betriebsarten sind in Tabelle 1 zusammengefasst.

TABELLE 1:

| Zustand | Elektrisch | Zylinder (26) | Anwendung |
|---|---|---|---|
| [0] Außer Betrieb | AUS | Hinten | Grundzustand |
| [1] Bereitschaft | AUS | Vorne | Bereitschaft für Betriebsart [2] bei eingeschaltetem Abblendlicht |
| [2] NIR-Strahler | EIN | Vorne | Fahrzustandsabhängige automatische Zuschaltung |
| [3] Gesamtstrahler | EIN | Hinten | Gebrauch wie konventionelles Fernlicht bzw. Lichthupe |

Im Grundzustand des Infrarotscheinwerfers 1 ist die Glühwendel 12 ausgeschaltet und der Umschaltzylinder 26 befindet sich in seiner hinteren Position (Figuren 3, 4) - der Scheinwerfer ist außer Betrieb [0].

Wird der separate Abblendscheinwerfer eingeschaltet, so wird der Infrarotscheinwerfer 1 in Bereitschaft versetzt, indem der Umschaltzylinder 26 in seine vordere Position verschoben wird. Die Stromversorgung der Glühwendel 12 ist noch abgeschaltet. Dieser Zustand ist in der Tabelle mit [1] gekennzeichnet.

Das Umschalten von diesem Bereitschaftsmodus [1] in den Modus als NIR-Strahler ([2] in der Tabelle) kann automatisch in Abhängigkeit vom Fahrzustand erfolgen. Die Erfassung dieses Zustands kann durch eine Geschwindigkeitsschwelle, aber auch durch die Auswertung der Häufigkeit von Geschwindigkeitsänderungen oder Lenkeinschlägen erfolgen, damit z. B. bei Kolonnenverkehr oder Langsamfahrt innerorts keine Störung anderer Verkehrsteilnehmer durch unnötig hohe NIR-Strahlung auftritt. Zwischen den Zuständen [1] und [2] ist insbesondere auch ein gleitender Übergang durch eine nach der Fahrgeschwindigkeit und/oder anderen Kriterien gestufte NIR-Strahlung, die über entsprechende Stromversorgung (Dimmung) der Glühwendel 12 eingestellt wird, sinnvoll.

Das Umschalten vom Zustand [2] auf [3] entspricht der konventionellen Fernlichtbedienung, wobei der Umschaltzylinder 26 elektromechanisch nach hinten verschoben wird und die Glühwendel 12 mit voller Leistung in Betrieb ist.

Das manuelle Umschalten zwischen dem Grundzustand [0] auf [3] erfolgt nur durch Einschalten des Brenners bei voller Leistung und entspricht einer konventionellen Lichthupe.

Im Falle der Anwendung als Kraftfahrzeug-Fernscheinwerfer wird die Glühlampe 4 so ausgewählt, dass der Scheinwerfer im aufgeblendeten Zustand [3] gemeinsam mit dem separat benötigten Abblendscheinwerfer die Mindestanforderungen an ein Kraftfahrzeug-Fernlicht erfüllt. Hierfür genügt eine übliche Glühlampe 4 mit einer Leistungsaufnahme von 50 bis 100 Watt. Bei reiner NIR-Abstrahlung, d.h. im Zustand [2] nach Tabelle 1, soll das Restlicht aus dem Scheinwerfer 1 zusammen mit dem weiterhin benötigten Abblendscheinwerfer die Anforderungen an ein Abblendlicht erfüllen.

Da sich die Restlichtmenge bei dem erfindungsgemäßen Konzept im Bereich von 1 Lumen bewegt, ist diese Anforderung ohne Probleme einzuhalten.

Die axiale Bewegung des Umschaltzylinders 26 kann rein translatorisch oder durch Überlagerung von Translation und Rotation über einen geeigneten Antrieb erfolgen, wobei dieser so ausgelegt ist, dass die Bewegung sehr schnell ist, so dass keine Verzögerung beim Umschalten entsteht. Das Erreichen der vorderen Position muss durch einen Endschalter oder dergleichen (nicht dargestellt) überprüft werden. Wenn nämlich auf Betriebsart [2] übergegangen werden soll, sich der Umschaltzylinder aufgrund eines Defektes aber nicht vollständig in die vordere Endstellung bewegt, tritt weiterhin das Fernlicht ganz oder teilweise aus, wodurch das Fahrzeug aufgrund der geschilderten Dimensionierung der Glühlampe 4 kein normkonformes Abblendlicht mehr hat und andere Verkehrsteilnehmer geblendet werden könnten.

Wenn also beim Übergang auf Betriebsart [1] oder [2] der Endschalter im Fehlerfalle nicht anspricht, muss die Stromversorgung der Glühlampe 4 unterbunden werden, wobei Betriebsart [3] aber weiterhin möglich sein soll.

Besonders bevorzugte Abmessungen der vorbeschriebenen Bauelemente sind der Tabelle 2 entnehmbar.

Ein besonderer Vorteil der erfindungsgemäßen Konstruktion liegt darin, dass durch die starre Anordnung des Filterkörpers 18 mit dem beschichteten Vorderteil 20 in Bezug zur Strahlungsquelle (Glühwendel 12) die Glühlampe 4 stets unter gleichbleibenden thermischen Umfeldbedingungen betrieben wird, auf die hin sie optimiert werden kann. Beweglich ist bei dem Ausführungsbeispiel gemäß Figur 3 lediglich der Umschaltzylinder 26, dessen Justierung jedoch sehr einfach möglich ist und dessen Bewegung oder Längenänderung mit einer einfach aufgebauten Mechanik erfolgen kann.

TABELLE 2:

| Bauteil | Dimension | Wertebereich |
|---|---|---|
| Reflektor (2) Zone I Zone II | Durchmesser Kanten-Wellenlänge $\lambda_3$ Spektrale Reflexion | 75-200mm 780-830nm (800nm) oder aselektiv Stets aselektiv |
| Glühlampe (4) | Leistung Verteilungstemperatur | 50-100W $\geq$ 2900K (3200K) |
| Wendel (12) | Länge | 3-6mm |
| Filterkörper (18) | Gesamtlänge Winkel $\alpha$ Material | 40-60mm 20-50° (40°) Quarzglas |
| Vorderteil (20) | Länge Durchmesser $D_V$ | 20-40mm 15-30mm |
| Schaft (22) | Länge (2L) Durchmesser $D_S$ | 20-30mm 12-20mm |
| Interferenzschicht (24) | Kanten-Wellenlänge $\lambda_1$ Material | 780-830nm (800nm) $SIO_2$, $TIO_2$, $Fe_2O_3$, $Nb_2O_5$ |
| Interferenzschicht (99) | Kanten-Wellenlänge $\lambda_2$ | 1050-1150nm (1100nm) |

Tabelle fortgesetzt

| Bauteil | Dimension | Wertebereich |
|---|---|---|
| | Material | SI, $SIO_2$, $TIO_2$, $Nb_2O_5$ |
| Umschaltzylinder (26) | Länge (L) | 10-15mm |
| | Innendurchmesser | $\rangle D_S$ |
| | Material | z. B. Edelstahl |

**Patentansprüche**

1. Infrarotscheinwerfer mit einem in einem Reflektor (2) angeordneten Infrarotstrahler, der eine Strahlungsquelle (12) aufweist, die in einem Innenraum (10) eines Lampengefäßes (6) aufgenommen ist, und mit einem Filter, das für Strahlung im Infrarotbereich durchlässig ist und Strahlung mit anderer Wellenlänge reflektiert und das an einem das Lampengefäß (6) zumindest abschnittsweise umgreifenden Filterkörper (18) angeordnet ist, **dadurch gekennzeichnet, dass** der Filterkörper (18) einen mit einer Filterschicht (24) versehenen und einen nicht mit einer Filterschicht versehenen Teil (20, 22) hat, die derart ausgebildet sind, dass eine Gesamtstrahlung (G) durch den unbeschichteten Teil (22) des Filterkörpers (18) im Wesentlichen auf einen anderen Bereich (Zone I) des Reflektors (2) einfällt als die durch die Filterschicht (24) transmittierte Infrarotstrahlung (NIR-Strahlung).

2. Infrarotscheinwerfer nach Anspruch 1, wobei der mit der Filterschicht (24) versehene Teil des Filterkörpers (18) als rotationssymmetrisches Vorderteil (20) ausgebildet ist, das das Lampengefäß (6) im Bereich der Strahlungsquelle (12) umgreift und an das sich ein Schaft (22) anschließt, der im Abstand zu dem sich vom Innenraum des Lampengefäßes (6) hin zum Reflektor (2) erstreckenden Teil des Lampengefäßes (6) angeordnet ist.

3. Infrarotscheinwerfer nach Anspruch 2, wobei das Vorderteil (20) etwa in Form eines Rotationsellipsoids und der Schaft (22) zylindrisch ausgebildet sind.

4. Infrarotscheinwerfer nach Anspruch 3, wobei die Strahlungsquelle eine in der Lampenachse (A-A) angeordnete Glühwendel (12) ist, die im Bereich zwischen den beiden Brennpunkten ($F_1$, $F_2$) des roatationselliptischen Vorderteils (20) angeordnet ist.

5. Infrarotscheinwerfer nach Anspruch 4, wobei der Übergang des Schafts (22) zum Vorderteil (20) auf einem Schnittkreis eines Kegels mit dem Vorderteil (20) liegt, dessen Spitze sich im rückwärtigen Ende der Glühwendel (12) befindet und dessen halber Kegelwinkel ($\alpha$) zwischen $20° \leq \alpha \leq 50°$, vorzugsweise $40°$ beträgt.

6. Infrarotscheinwerfer nach einem der vorhergehenden Ansprüche, wobei der Filterkörper (18) aus Quarzglas gebildet ist und die Filterschicht ein IR-Kantenfilter, vorzugsweise in Form einer Interferenzbeschichtung (24) ist.

7. Infrarotscheinwerfer nach einem der vorhergehenden Ansprüche, wobei die Kantenwellenlänge $\lambda_1$ des Filters bei etwa 780 nm bis 830 nm, vorzugsweise bei 800 nm liegt.

8. Infrarotscheinwerfer nach einem der vorhergehenden Ansprüche, wobei die beiden Bereiche (Zone I, Zone II) des Reflektors (2) aus unterschiedlichem Material hergestellt oder unterschiedlich beschichtet sind, wobei der vordere Bereich (Zone II), auf den die gefilterte Strahlung (NIR) auftritt, aselektiv ausgebildet ist, während der hintere Bereich (Zone I), auf den die Gesamtstrahlung (G) einfällt, derart ausgebildet ist, dass die Strahlung oberhalb einer vorbestimmten Wellenlänge $\lambda_3$, beispielsweise 800 nm reflektiert und ansonsten absorbiert wird.

9. Infrarotscheinwerfer nach Anspruch 8, wobei der vordere Bereich (Zone II) durch farblos eloxiertes Aluminium oder durch mit Silber bedampftes Aluminium, Kunststoff oder Glas und der hintere Teil (Zone I) durch schwarz eloxiertes Aluminium oder durch mit einer die Infrarotstrahlung reflektierenden Interferenzschicht versehenes Glas oder schwarzen Kunststoff gebildet ist.

10. Infrarotscheinwerfer nach einem der Ansprüche 1 bis 7, mit einer Fernlichtfunktion, wobei der Reflektor (2) vollständig aus einem aselektiv reflektierenden Material besteht oder damit beschichtet ist.

11. Infrarotscheinwerfer nach einem der auf die Ansprüche 3 und 10 zurückbezogenen Ansprüche, wobei auf dem Schaft (22) ein Umschaltzylinder (26) verschiebbar geführt ist, dessen Mantel im Wesentlichen strahlungsundurchlässig ist und der in der Funktion als Infrarotscheinwerfer hin zum Vorderteil und in der der Fernlichtfunktion hin zum Reflektor (2) verschiebbar oder verlängerbar ist.

12. Infrarotscheinwerfer nach Anspruch 11, wobei die Länge (L) des Umschaltzylinders (26) etwa der halben Länge (2L) des Schafts (22) entspricht.

13. Infrarotscheinwerfer nach Anspruch 11 oder 12, wobei die Verschiebung mittels eines Antriebs des Umschaltzylinders (26) translatorisch oder durch Überlagerung einer Rotations- und Translationsbewegung erfolgt.

14. Infrarotscheinwerfer nach Anspruch 11, wobei der Umschaltzylinder (26) teleskopartig verlängerbar ist.

15. Infrarotscheinwerfer nach einem der Ansprüche 11 bis 14, wobei der Umschaltzylinder (26) aus Edelstahl hergestellt ist.

16. Infrarotscheinwerfer nach einem der vorhergehenden Ansprüche, wobei der Filterkörper (18) und der Infrarotstrahler (4) vom Reflektor (2) umgriffen sind.

17. Infrarotscheinwerfer nach einem der Ansprüche 11 bis 15, bei dem in der vorderen Position des Umschaltzylinders (26) ein Endschalter geschlossen wird.

18. Infrarotscheinwerfer nach Anspruch 17, bei dem in der vorderen Position des Umschaltzylinders (26) die Glühlampe (4) nur dann mit Strom versorgt wird, wenn der Endschalter geschlossen ist.

19. Infrarotstrahler mit einem Lampengefäß (6), in dessen Innenraum eine Glühwendel (12) aufgenommen ist und das an einem Endabschnitt eine Quetschung (8) hat, durch die Stromzuführungen (14, 16) hindurch geführt sind, **gekennzeichnet durch** einen Filterkörper (18), der das Lampengefäß (6) mit einem rotationssymmetrischen Vorderteil (20) umschließt, das mit einer Interferenzbeschichtung (24) versehen ist und an das sich ein Schaft (22) ohne Interferenzbeschichtung anschließt, **durch** den eine Gesamtstrahlung (G) hindurchtreten kann.

20. Infrarotstrahler nach Anspruch 19 mit einem Lampengefäß (6), dessen Material die von der Glühwendel (12) ausgesendete Strahlung aselektiv transmittiert.

21. Infrarotstrahler nach Anspruch 19 mit einem Lampengefäß (6), das mit einem IR-Kantenfilter, vorzugsweise in Form einer Interferenzbeschichtung (99) versehen ist, dessen Kantenwellenlänge $\lambda_2$ im Bereich von 1050 nm bis 1150 nm, vorzugsweise bei 1100nm, liegt.

22. Infrarotscheinwerfer nach den Ansprüchen 7 und 21, bei dem die Kantenwellenlängen $\lambda_1$ und $\lambda_2$ der Beschichtungen (24) und (99) in einem Verhältnis $\lambda_2 > \lambda_1$ stehen.

23. Nachtsichtsystem mit einem Infrarotscheinwerfer nach einem oder mehreren der Ansprüche 1 bis 22 und einer Kamera, vorzugsweise einer Kamera, die im Wellenlängenbereich 380 nm bis 1100 nm eine hohe und möglichst gleichbleibende Empfindlichkeit aufweist.

FIG 1

FIG 2

FIG 4

FIG 3